# EUROPEAN PATENT SPECIFICATION

(11) **EP 4 496 093 B1**
(45) Date of publication and mention of the grant of the patent: **25.03.2026**
(21) Application number: 23891930.2
(22) Date of filing: 10.11.2023
(51) Int. Cl.: H01M 50/24, H01M 50/204, H01M 50/264, H01M 50/233, H01M 50/289, H01M 50/209, H01M 50/271

(54) **BATTERY PACK**
BATTERIEPACK
BLOC-BATTERIE

(30) Priority: 14.11.2022 KR 20220151958
(43) Date of publication of application: 22.01.2025
(60) Divisional application: 26157149.1
(73) Proprietor: LG Energy Solution, Ltd., Seoul 07335 (KR)
(72) Inventor: LEE, Gi Hwan, Daejeon 34122 (KR); SHIN, Ju Hwan, Daejeon 34122 (KR); LEE, Jae Hyun, Daejeon 34122 (KR); LEE, Hyoung Suk, Daejeon 34122 (KR)
(74) Representative: Plasseraud IP
(86) International application number: PCT/KR2023/018092
(87) International publication number: WO 2024/106863

(56) References cited:
- EP-A1- 2 768 045
- CN-A- 108 140 776
- CN-B- 102 820 439
- CN-U- 217 655 981
- JP-A- 2012 169 171
- KR-A- 20220 003 247
- KR-A- 20220 033 931
- KR-A- 20220 116 815
- KR-B1- 102 445 906
- US-A1- 2022 302 551

## Description

### [Technical Field]

The present invention relates to a battery pack, characterized in that it prevents high temperature heat generated by thermal runaway of some of the battery modules housed therein from propagating to other normal battery modules through a base plate corresponding to the bottom of the battery pack.

### [Background Technology of the Invention]

Securing the safety of lithium secondary batteries is one of the most important issues as there is a risk of explosion and fire due to overheating. The problem is that if these abnormalities are not appropriately coped with in the early stages, the internal temperature of the secondary battery will increase rapidly due to heat generation, and the rapid increase in temperature will cause a thermal runaway phenomenon, which may lead to an explosion of the secondary battery, and it may spread to neighboring secondary batteries, causing great damage to the battery pack.

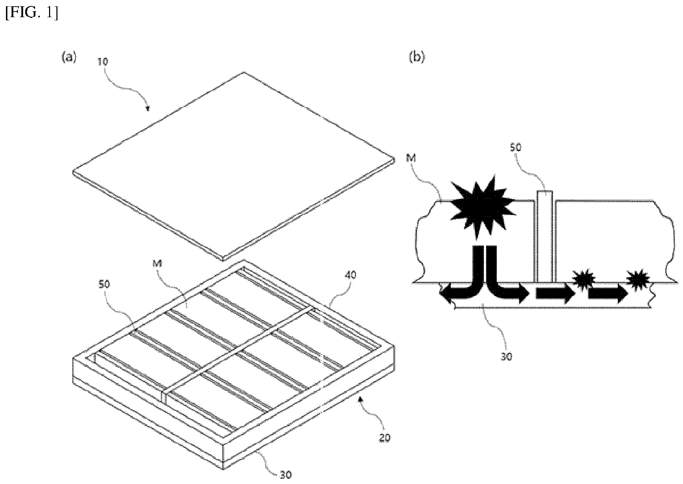

FIG. 1 illustrates a pack case 20 comprising a conventional battery pack, and a top cover 10 that is coupled to the pack case 20. As shown in FIG. 1(a), a plurality of battery modules M is supported by a base plate 30 in the lower part, and the side part is supported by a side wall 40 and a separation wall 50. Thus, each battery module M may be protected in all directions by the base plate 30 supporting the lower part, the top cover 10 covering the top part, and the side wall 40 and separation wall 50 supporting the side part.

Generally, the base plate 30 is prepared to be thick for stability. Specifically, a conventional base plate 30 is made so that it is not deformed even under the pressure of a high temperature gas generated by the thermal runaway of the battery module M. Therefore, the conventional base plate 30 can continuously maintain contact with the thermally runaway battery module M as shown in FIG. 1(b). Conventional battery packs suffer from the fatal problem that such contact can conduct high temperature heat to other normal battery modules M.

### [Prior Art Documents]

Korean Patent Publication No. 10-2170043911 Document CN 217655981 U and CN 102820439 B disclose battery packs comprising a pack case having a bottom plate used for circulating a cooling fluid or cooling air. In the case of document CN 217655981 U, the bottom plate is also thinner than a top cover of the battery case.

### [Description of the Invention]

### [Technical Problem]

Accordingly, the present invention was conceived to solve the above problems, and aims to provide a battery pack having a structure capable of preventing high temperature heat generated by thermal runaway of some of the battery modules housed therein from propagating to other normal battery modules

Other objects and advantages of the present invention will be understood from the following description, and will become apparent from the embodiments of the present invention. In addition, it will be readily apparent that the objects and advantages of the present invention may be realized by the means and combinations thereof disclosed in the claims of the patent.

### [Technical Solution]

According to the present invention, there is provided a battery pack according to claim 1.

The battery pack after the invention may present one or more feature(s) of dependent claims 2 to 10, in any combination allowed by the claims.

### [Advantageous Effects]

According to the present invention, even if high temperature heat and gas are generated due to thermal runaway of some of the battery modules among the plurality of battery modules housed therein, the stability of the battery pack can be improved by preventing the propagation of the heat.

### [Brief Description of the Drawings]

FIG. 1 illustrates a conventional battery pack.
FIG. 2 is a perspective view of a battery pack according to a first embodiment of the present invention.
FIG. 3 illustrates a pack case of the present invention and a plurality of battery modules seated in the pack case.
FIG. 4 is a perspective view of a modified example of a pack case of the present invention.
FIG. 5 is a cross-sectional view of the pack case and top cover of FIG. 4.
FIG. 6 illustrates the coupling of the pack case and top cover of FIG. 5.
FIG. 7 illustrates a thermal runaway of any one battery module among the plurality of battery modules housed in the battery pack of FIG. 6.
FIG. 8 is a perspective view of a pack case included in a battery pack according to a second embodiment of the present invention with a fixing member.
FIG. 9 is a cross-sectional view of the pack case and top cover of FIG. 8.
FIG. 10 illustrates the pack case of FIG. 9 coupled to the top cover.
FIG. 11 illustrates a thermal runaway in some of the battery modules among the plurality of battery modules housed in the battery pack of FIG. 10.
FIG. 12 is a cross-sectional view of a battery pack according to a third embodiment of the present invention.
FIG. 13 illustrates a thermal runaway in some of the battery modules among the plurality of battery modules included in the battery pack of FIG. 12.
FIG. 14 is a perspective view of a pack case included in a battery pack according to a fourth embodiment of the present invention.
FIG. 15 is a cross-sectional view of the coupling of the pack case and top cover of FIG. 14.
FIG. 16 illustrates a thermal runaway that has occurred in some of the battery modules among the plurality of battery modules included in the battery pack of FIG. 15.

### [Best Mode for Carrying out the Invention]

Hereinafter, the preferred embodiments of the present invention will be described in detail with reference to the attached drawings.

The embodiments of the present invention are provided to illustrate the invention more fully to those of ordinary skill in the art, and the shapes and sizes of the components in the drawings may be exaggerated, omitted, or shown schematically for clarity. Accordingly, the size or proportions of each component are not necessarily indicative of its actual size or proportions.

The present invention relates to a battery pack in which battery modules M are housed, characterized in that it prevents the high temperature heat generated by thermal runaway of some of the housed battery modules M from propagating to other normal battery modules M through a base plate 110 corresponding to the bottom of the battery pack.

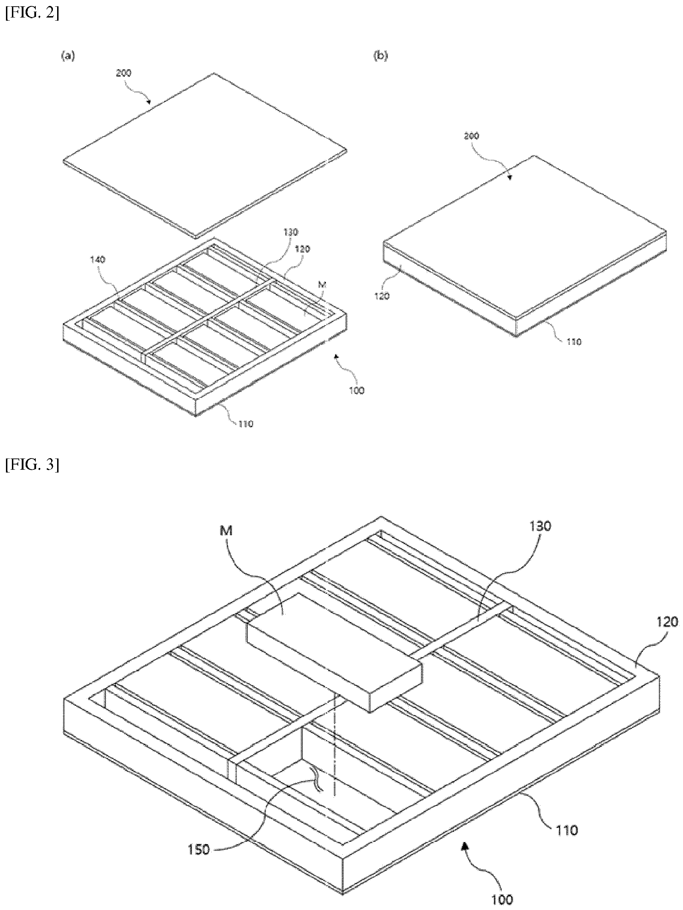

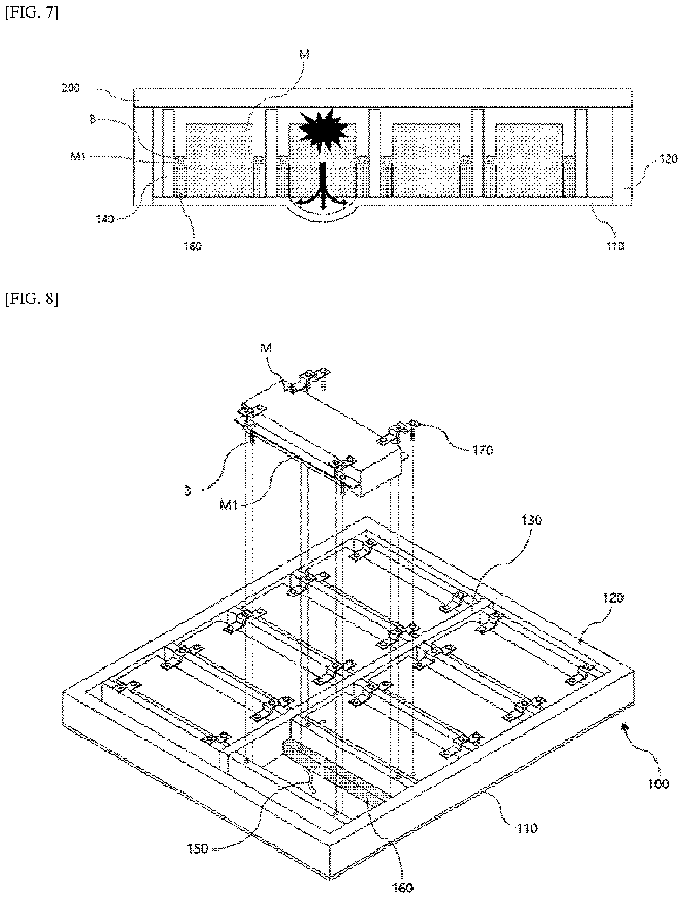

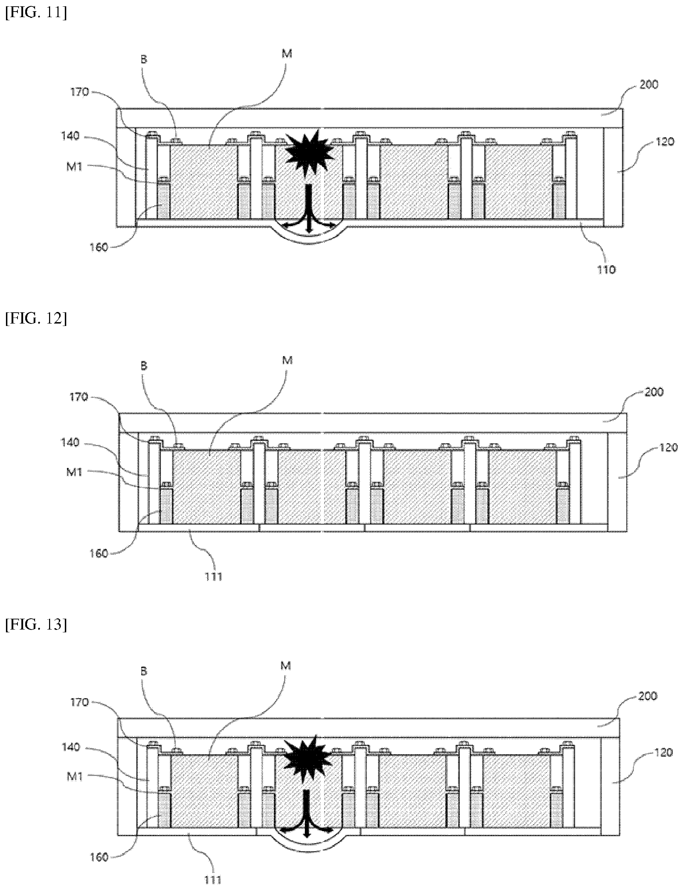

FIGS. 2 through 6 relate to a battery pack according to a first embodiment of the present invention, FIGS. 7 through 10 relate to a battery pack according to a second embodiment of the present invention, FIGS. 11 through 12 relate to a battery pack according to a third embodiment of the present invention, and FIGS. 13 through 15 relate to a battery pack according to a fourth embodiment of the present invention.

Hereinafter, each embodiment of the battery pack of the present invention will be described below with reference to the respective drawings.

### (First embodiment)

FIG. 2 is a perspective view of a battery pack according to a first embodiment of the present invention.

A battery pack of the present invention includes a pack case 100 and a top cover 200, as shown in FIG. 2.

The pack case 100 includes a module area 150 in which the battery modules M may be seated, and supports and protects the side part and lower part of each seated battery module M from the outside.

The pack case 100 includes a base plate 110 that supports a lower part of the battery module M, as shown in FIG. 2(a), and a side wall 120 that is coupled along a border of the base plate 110.

The base plate 110 corresponds to the bottom of the pack case 100 and serves to support and protect the lower part of the seated battery module M.

The side wall 120 serves to support and protect the side part of the plurality of battery modules M seated on the base plate 110 from the outside.

FIG. 3 illustrates a pack case 100 of the present invention and a plurality of battery modules M seated in the pack case 100, and the pack case 100 of the present invention may further include a main separation wall 130 coupled to the base plate 110 across a center as shown in FIGS. 2 and 3, and sub separation wall 140 coupled to the main separation wall 130 and side wall 120 at both ends, respectively, and is spaced at predetermined distance along a longitudinal direction of the main separation wall 130 to be coupled to the base plate 110.

The main separation wall 130 traverses the interior space of the pack case 100 and compartmentalizes the space in which the battery module M is seated largely into two spaces, and the sub separation wall 140 further compartmentalizes the space compartmentalized by the main separation wall 130 into a plurality of spaces.

Inside the main separation wall 130, various wires and busbars used in the battery pack may be inserted or mounted, or alternatively, the inside of the main separation wall 130 may be empty.

The sub separation wall 140 compartmentalizes the plurality of battery modules M located on one side of the main separation wall 130 so that they can be separated from each other.

The module area 150 of the present invention is formed by the compartmentalization of the main separation wall 130 and the sub separation wall 140.

In each module area 150 formed by the compartmentalization of the main separation wall 130 and the sub separation wall 140, a battery module M may be seated one by one. The battery module M housed in the module area 150 may also be fixed to the pack case 100 for a more stable mounting.

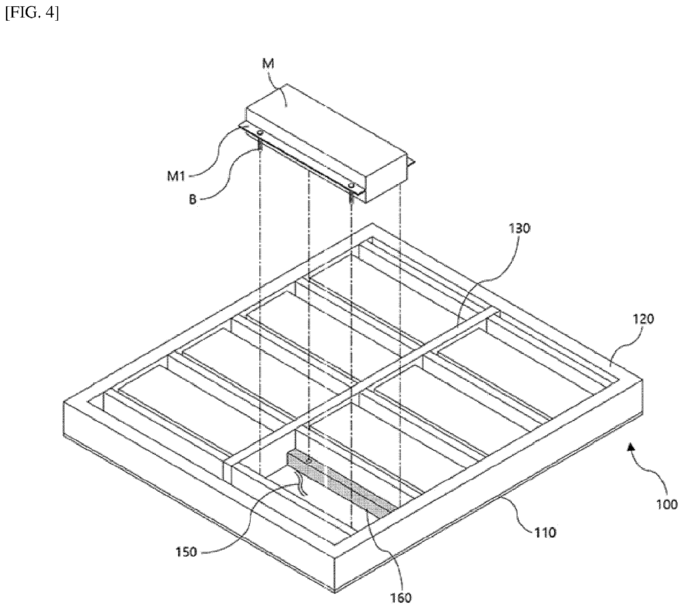

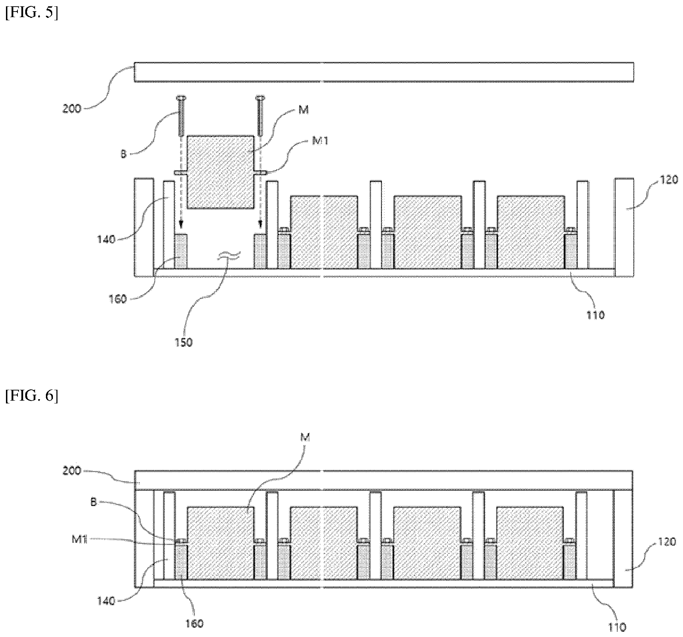

FIG. 4 is a perspective view of a modified example of the pack case 100 of the present invention, FIG. 5 is a cross-sectional view of the pack case 100 and top cover 200 of FIG. 4, and FIG. 6 illustrates a coupling of the pack case 100 and top cover 200 of FIG. 5.

The battery module M used in the battery pack of the present invention may include a protrusion part M1 protruding from both sides as shown in FIGS. 4 and 5. In addition, the pack case 100 in which the battery module M in the above-mentioned form is mounted may further include a support block 160 protruding from the boundaries of the sub separation wall 140 and the base plate 110. Specifically, the battery module M is seated in the module area 150 such that the protrusion part M1 is supported on an upper part of the support block 160, as shown in FIGS. 4 and 5.

A battery module M seated in the module area 150 may be fixed to the pack case 100 by a bolt member B that penetrates the protrusion part M1 and is screwed to the support block 160.

The top cover 200 is coupled to the pack case 100 to cover the top part of each battery module M seated in the pack case 100, as shown in FIG. 2(b). More specifically, the top cover 200 may have its ends abutting the top end of side wall 120 coupled along the border of the base plate 110, and may be screw-coupled to the side wall 120 by a bolt member B and the like so that the interior of the pack case 100 may be sealed.

The battery pack of the present invention may be sealed such that each module area 150 is independent of each other by the coupling of the pack case 100 and the top cover 200, as shown in FIG. 6. More specifically, each module area 150 of the present invention can be sealed by the top cover 200 coupled with the pack case 100 abutting the top end of the main separation wall 130 and the sub separation wall 140 without gaps. Therefore, even if a thermal runaway occurs in the battery modules M included in one module area 150, the high temperature gases caused by the thermal runaway are not directly transferred to the battery modules M in the other module area 150.

Generally, the base plate 110 may be made of aluminum material, which is manufactured with a thick thickness so that it does not deform under high temperature and high pressure. That is, the conventional base plate 110 is manufactured with a thicker thickness than the top cover 200, so that when high temperature and high pressure gas is generated inside the sealed battery pack, the relatively thin top cover 200 swells and deforms under the gas pressure.

The battery pack of the present invention is characterized in that the thickness of the base plate 110 included in the pack case 100 is adjusted to be thinner than the top cover 200. In other words, the battery pack of the present invention is designed so that the base plate 110 is deformed by gas pressure before the top cover 200 when high temperature and high pressure gas is generated inside.

However, the base plate 110 should at least have the strength to withstand the weight of the battery module M.

Preferably, the base plate 110 of the present invention can be deformed by changes in at least one of pressure and temperature in the module area 150.

FIG. 7 illustrates a thermal runaway of any one battery module M among the plurality of battery modules M housed in the battery pack of FIG. 6.

Thermal runaway of the battery module M generates high temperature heat and gas, which fills the sealed module area 150 with gas pressure. Subsequently, the gas pressure pushes out the base plate 110, which is relatively thin in thickness and weak in strength, and deforms the shape of the base plate 110.

Due to the shape deformation of the base plate 110, the contact area between the battery module M and the base plate 110 is reduced, thereby reducing the rate at which the high temperature heat moves through conduction. Therefore, the high temperature heat generated by the battery module M having experienced thermal runaway cannot be easily transferred to other neighboring battery modules M through the base plate 110, thereby preventing the phenomenon of cascading thermal runaway to other battery modules M.

### (Second embodiment)

The battery pack of the present invention may further include a fixing member 170 capable of fixing the battery module M to the sub separation wall 140.

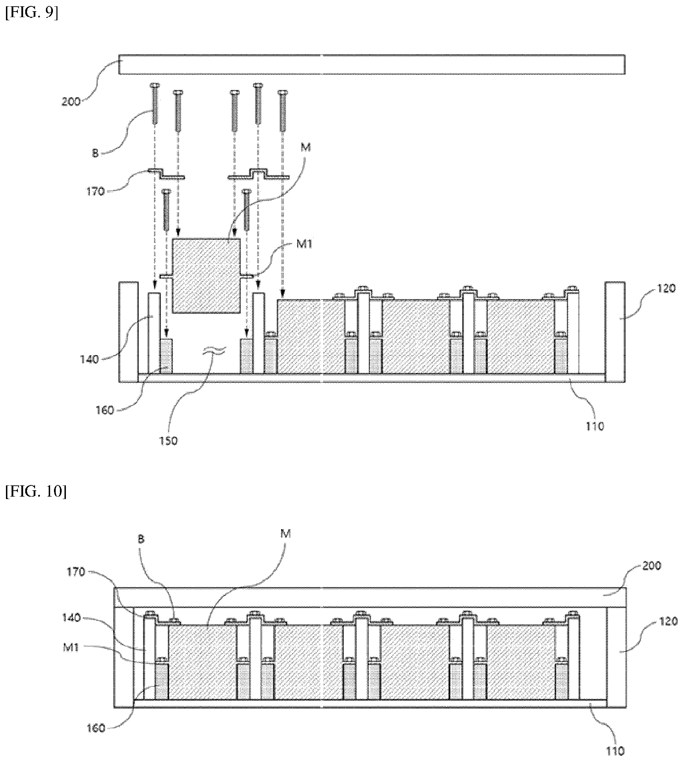

FIG. 8 is a perspective view of a pack case 100 included in a battery pack according to a second embodiment of the present invention with a fixing member 170, FIG. 9 is a cross-sectional view of the pack case 100 and top cover 200 of FIG. 8, and FIG. 10 shows the pack case 100 of FIG. 9 coupled to the top cover 200.

The pack case 100 included in a battery pack according to a second embodiment of the present invention further includes a sub separation wall 140 as shown in FIGS. 8 to 10 and a fixing member 170 that is coupled to a battery module M seated adjacent to the sub separation wall 140. Specifically, a battery module M seated on the pack case 100 is fixed to the sub separation wall 140 by a top end being coupled to an end of the fixing member 170, and further by a bolt member B penetrating through the fixing member 170 and screwed to a top end of the battery module M.

The fixing member 170 may span the sub separation wall 140 as shown and may each be screw-coupled to a battery module M located on both sides of the sub separation wall 140. That is, a pair of neighboring battery modules M interposed with the sub separation wall 140 therebetween may be fixed thereto via one fixing member 170.

Fixing the battery module M to the sub separation wall 140 via the fixing member 170 in this manner is intended to prevent the battery module M from falling down along with the base plate 110 when the base plate 110 inflates outwardly due to thermal runaway of the battery module M. In other words, the fixing member 170 serves to keep the battery module M having experienced thermal runaway fixed to the sub separation wall 140, thereby reducing as much as possible the contact of the battery module M with the base plate 110.

The battery pack of the present invention may have four fixing members 170 fixed to one battery module M as shown, but the number and form of fixing members 170 used need not be limited to those shown, provided that each battery module M can be fixed to the sub separation wall 140.

The fixing member 170 is also preferably screwed to the sub separation wall 140. The fixing member 170 may be fixed by being screw-coupled to the top end of the sub separation wall 140 as shown in FIGS. 8 through 10.

Also not shown, but the fixing member 170 may also be fixed to the sub separation wall 140 by a bolt member B that simultaneously penetrates the top cover 200 and the fixing member 170 and is screwed to the top end of the sub separation wall 140.

FIG. 11 illustrates that thermal runaway has occurred in some of the battery modules M among the plurality of battery modules M housed in the battery pack of FIG. 10.

Referring to FIG. 11, it can be seen that the base plate 110 is deformed by the gas pressure caused by the thermal runaway of the battery module M causing the base plate 110 to fall downward, but that the battery module M is not falling down with the base plate 110 and is being fixed in place by the fixing member 170.

In other words, the more severely the base plate 110 is deformed by the gas pressure, the less contact area there is between the battery module M having experienced thermal runaway and the base plate 110 falling down.

### (Third embodiment)

The base plate 110 included in the battery pack of the present invention may be formed by a coupling of a plurality of support plates 111.

FIG. 12 is a cross-sectional view of a battery pack according to a third embodiment of the present invention.

As shown in FIG. 12, one base plate 110 is formed by the connection of a plurality of support plates 111.

That is, the base plate 110 is formed by the coupling of a plurality of support plates 111 corresponding to each module area 150, and the support plates 111 are deformed by changes in at least one of pressure and temperature of the corresponding module area 150.

Each support plate 111 may be screwed to the lower end of the side wall 120, the main separation wall 130, and the sub separation wall 140, and may be connected and coupled between each support plate 111.

If needed, additional insulating members may be interposed between each support plate 111 to maximally suppress heat transfer between each support plates 111.

FIG. 13 illustrates that thermal runaway has occurred in some of the battery modules M among the plurality of battery modules M included in the battery pack of FIG. 12.

Referring to FIG. 13, only the support plate 111 corresponding to the module area 150 in which the battery module M experiencing thermal runaway is housed is deformed.

### (Fourth embodiment)

The battery pack of the present invention may apply protrusions 112 to the surface of the base plate 110 in order to reduce the contact area of the battery module M and the base plate 110 as much as possible.

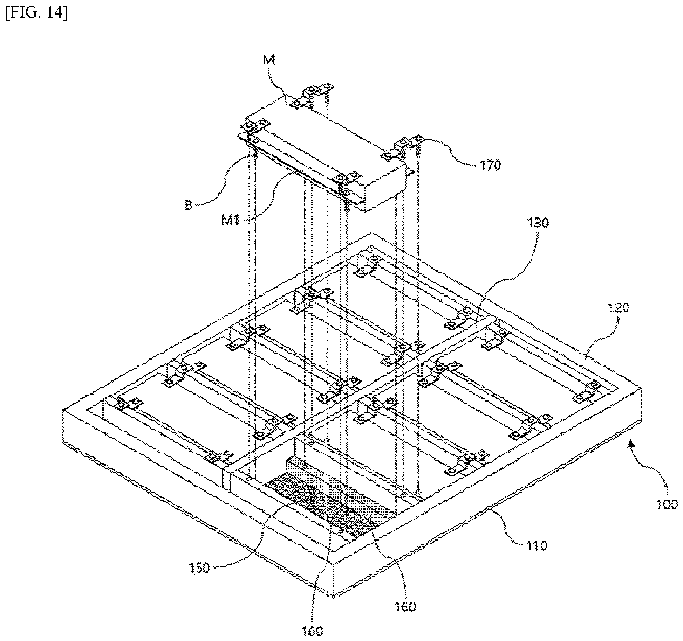

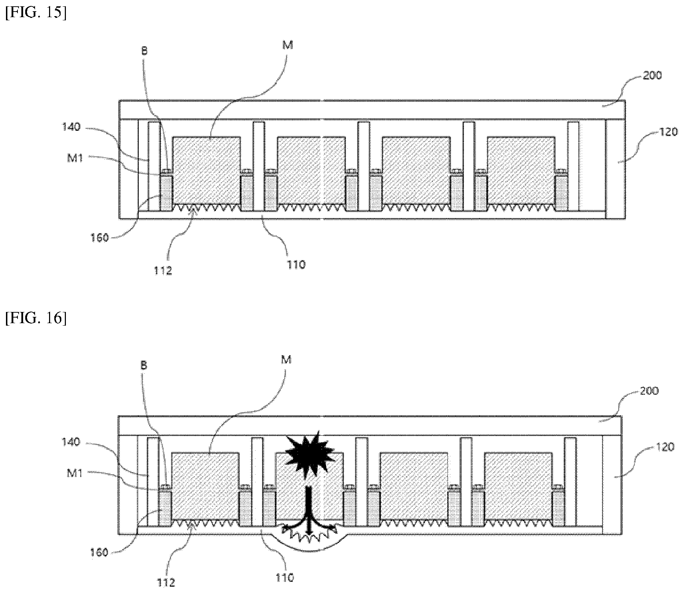

FIG. 14 is a perspective view of a pack case 100 included in a battery pack according to a fourth embodiment of the present invention, and FIG. 15 is a cross-sectional view of the pack case 100 of FIG. 14 coupled to the top cover 200.

The base plate 110 includes a plurality of protrusions 112 protruding upwardly as shown in FIGS. 14 and 15.

The protrusions 112 may be formed dispersed over the top part of the base plate 110 in the form of dots as shown, but are not limited thereto, and may also be formed extending side-by-side in one direction over the top part of the base plate 110 in the form of lines.

The dot-shaped protrusions 112 may protrude into various shapes. For example, the protrusions 112 may protrude into any one of a horn shape and a column shape.

The line-shaped protrusions 112 may extend in any one of a straight line and a curved line.

Thus, the battery module M seated in each module area 150 is supported on the top end of the protrusion 112 so that its entire area cannot be in contact with the base plate 110.

FIG. 16 illustrates that thermal runaway has occurred in some of the battery modules M among the plurality of battery modules M included in the battery pack of FIG. 15.

Referring to FIG. 16, the base plate 110 located at the lower part of the battery module M experiencing thermal runaway is deformed while retaining the protrusions 112, so that the contact point with the battery module M is further reduced. Furthermore, a plurality of normal battery modules M disposed in close proximity may receive only a small amount of heat due to the protrusions 112, even though high temperature heat is transferred through the base plate 110.

### [Reference numerals]

10: (CONVENTIONAL ART) TOP COVER
20: (CONVENTIONAL ART) PACK CASE
30: (CONVENTIONAL ART) BASE PLATE
40: (CONVENTIONAL ART) SIDE WALL
50: (CONVENTIONAL ART) SEPARATION WALL
100: PACK CASE
110: BASE PLATE
111: SUPPORT PLATE
112: PROTRUSION
120: SIDE WALL
130: MAIN SEPARATION WALL
140: SUB SEPARATION WALL
150: MODULE AREA
160: SUPPORT BLOCK
170: FIXING MEMBER
200: TOP COVER
B: BOLT MEMBER
M: BATTERY MODULE
M1: PROTRUSION PART

## Claims

1. A battery pack, comprising:
a battery module (M);
a pack case (100) including a module area (150) where the battery module (M)is seated; and
a top cover (200) coupled to the pack case (100) to cover the top part of each battery module (M) seated in the pack case (100), wherein
the pack case (100) comprises:
a base plate (110) supporting a lower part of the battery module (M); and
a side wall (120) coupled along a border of the base plate (110), wherein
the base plate (110) is less thick than the top cover,
the pack case (110) further comprising:
a main separation wall (130) traversing the center and coupled to the base plate (110);
a sub separation wall (140) coupled at both ends to the main separation wall (130) and side wall (120), respectively, and coupled to the base plate (110) at a predetermined distance spaced along the longitudinal direction of the main separation wall (130); and
a fixing member (170) coupled to a battery module (M) seated adjacent the sub separation wall (140),
wherein the module area (150) is formed in a plurality by compartmentalization of the main separation wall (130 and sub separation wall (140),
**characterized in that** the pack case further comprises:
a support block (160) protruding from a boundary of the sub separation wall (140) and base plate (110);
wherein the battery module (M) further comprises a protrusion part (M1) protruding to be supported on the top part of the support block (160) on both sides,
wherein the battery module (M) is fixed to the pack case (100) by a bolt member penetrating the protrusion part (M1) and screwed to the support block (160),
wherein the battery module (M) is fixed to the sub separation wall (140) by screwing together the top end and the end of the fixing member (170),
wherein the fixing member (170) spans the sub separation wall (140) to be screw-coupled to battery modules (M) located on both sides of the sub separation wall (140), respectively. and
wherein the fixing member (170) is fixed by being screw-coupled to the top end of the sub separation wall (140).

2. The battery pack of claim 1, wherein
the base plate (110) is deformed by changes in at least one of pressure and temperature in the module area (150).

3. The battery pack of claim 1, wherein
each of the module areas (150) is sealed by the main separation wall (130) and sub separation wall (140).

4. The battery pack of claim 1, wherein
the base plate (110) is formed by the coupling of a plurality of support plates (111) corresponding to each module area (150), wherein
each of the support plates (111) is deformed by changes in at least one of pressure and temperature of a corresponding module area (150).

5. The battery pack of claim 1, wherein
the base plate (110) includes a plurality of protrusions (112) protruding upwardly.

6. The battery pack of claim 5, wherein
the protrusions (112) are formed dispersedly on the top part of the base plate (110) in the form of dots, or are formed extending unidirectionally side by side on the top part of the base plate (110) in the form of lines.

7. The battery pack of claim 6, wherein
the protrusions (112) in the form of dots protrude into either a horn or a column shape.

8. The battery pack of claim 6, wherein
the protrusions (112) in the form of lines extend in the form of either a straight line or a curved line.

9. The battery pack of claim 1, wherein
the base plate (110) has a strength to withstand at least the weight of the battery module (M).

10. The battery pack of claim 1, wherein
the base plate (110) inflates outwardly by the pressure of gases generated in the module area (150).

## Patentansprüche

1. Batteriepack, umfassend:
ein Batteriemodul (M);
ein Packgehäuse (100), welches einen Modulbereich (150) umfasst, in welchem das Batteriemodul (M) aufgenommen ist; und
eine obere Abdeckung (200), welche mit dem Packgehäuse (100) gekoppelt ist, um den oberen Teil jedes Batteriemoduls (M) abzudecken, welches in dem Packgehäuse (100) aufgenommen ist, wobei
das Packgehäuse (100) umfasst:
eine Basisplatte (110), welche einen unteren Teil des Batteriemoduls (M) stützt; und
eine Seitenwand (120), welche entlang einer Grenze der Basisplatte (110) gekoppelt ist, wobei
die Basisplatte (110) weniger dick ist als die obere Abdeckung,
wobei das Packgehäuse (110) ferner umfasst:
eine Haupttrennwand (130), welche die Mitte durchquert und mit der Basisplatte (110) gekoppelt ist;
eine Untertrennwand (140), welche an beiden Enden mit der Haupttrennwand (130) bzw. der Seitenwand (120) gekoppelt ist und in einem entlang der longitudinalen Richtung der Haupttrennwand (130) beabstandeten vorbestimmten Abstand mit der Basisplatte (110) gekoppelt ist; und
ein Befestigungselement (170), welches mit einem Batteriemodul (M) gekoppelt ist, das benachbart zu der Untertrennwand (140) aufgenommen ist,
wobei der Modulbereich (150) durch eine Kompartimentierung der Haupttrennwand (130) und der Untertrennwand (140) in einer Mehrzahl gebildet ist,
**dadurch gekennzeichnet, dass** das Packgehäuse ferner umfasst:
einen Stützblock (160), welcher von einer Grenze der Untertrennwand (140) und der Basisplatte (110) vorsteht;
wobei das Batteriemodul (M) ferner einen Vorsprungsteil (M1) umfasst, welcher derart vorsteht, dass er an dem oberen Teil des Stützblocks (160) an beiden Seiten gestützt ist,
wobei das Batteriemodul (M) durch ein Bolzenelement, welches den Vorsprungsteil (M1) durchdringt und an den Stützblock (160) geschraubt ist, an dem Packgehäuse (100) befestigt ist,
wobei das Batteriemodul (M) durch ein Zusammenschrauben des oberen Endes und des Endes des Befestigungselements (170) an der Untertrennwand (140) befestigt ist,
wobei das Befestigungselement (170) die Untertrennwand (140) derart überspannt, dass es jeweils mit Batteriemodulen (M) gekoppelt ist, welche sich an beiden Seiten der Untertrennwand (140) befinden, und
wobei das Befestigungselement (170) dadurch befestigt ist, dass es mit dem oberen Ende der Untertrennwand (140) schraubgekoppelt ist.

2. Batteriepack nach Anspruch 1, wobei
die Basisplatte (110) durch Änderungen in wenigstens einem aus Druck und Temperatur in dem Modulbereich (150) verformt wird.

3. Batteriepack nach Anspruch 1, wobei
jeder der Modulbereiche (150) durch die Haupttrennwand (130) und die Untertrennwand (140) abgedichtet ist.

4. Batteriepack nach Anspruch 1, wobei
die Basisplatte (110) durch das Koppeln einer Mehrzahl von Stützplatten (111) gebildet wird, welche jedem Modulbereich (150) entsprechen, wobei
jede der Stützplatten (111) durch Änderungen in wenigstens einem aus Druck und Temperatur eines entsprechenden Modulbereichs (150) verformt wird.

5. Batteriepack nach Anspruch 1, wobei
die Basisplatte (110) eine Mehrzahl von Vorsprüngen (112) umfasst, welche nach oben vorstehen.

6. Batteriepack nach Anspruch 5, wobei
die Vorsprünge (112) verstreut an dem oberen Teil der Basisplatte (110) in der Form von Punkten gebildet sind oder unidirektional nebeneinander an dem oberen Teil der Basisplatte (110) in der Form von Linien gebildet sind.

7. Batteriepack nach Anspruch 6, wobei
die Vorsprünge (112) in der Form von Punkten in entweder eine Horn- oder eine Säulenform vorstehen.

8. Batteriepack nach Anspruch 6, wobei
sich die Vorsprünge (112) in der Form von Linien in der Form von entweder einer geraden Linie oder einer gekrümmten Linie erstrecken.

9. Batteriepack nach Anspruch 1, wobei
die Basisplatte (110) eine derartige Festigkeit aufweist, dass sie wenigstens dem Gewicht des Batteriemoduls (M) standhält.

10. Batteriepack nach Anspruch 1, wobei
sich die Basisplatte (110) durch den Druck von in dem Modulbereich (150) erzeugten Gasen nach außen aufbläst.

## Revendications

1. Bloc-batterie, comprenant :
un module de batterie (M) ;
un boîtier de bloc (100) comportant une zone de module (150) où le module de batterie (M) est posé ; et
un couvercle supérieur (200) accouplé au boîtier de bloc (100) pour recouvrir la partie supérieure de chaque module
de batterie (M) posé dans le boîtier de bloc (100), dans lequel le boîtier de bloc (100) comprend :
une plaque de base (110) portant une partie inférieure du module de batterie (M) ; et une paroi latérale (120) accouplée le long d'un bord de la plaque de base (110), dans lequel
la plaque de base (110) est moins épaisse que le couvercle supérieur,
le boîtier de bloc (110) comprenant en outre :
une paroi de séparation principale (130) traversant le centre et accouplée à la plaque de base (110) ;
une paroi de séparation secondaire (140) accouplée aux deux extrémités à la paroi de séparation principale (130) et à la paroi latérale (120), respectivement, et accouplée à la plaque de base (110) à une distance prédéterminée espacée le long de la direction longitudinale de la paroi de séparation principale (130) ; et
un élément de fixation (170) accouplé à un module de batterie (M) posé adjacent à la paroi de séparation secondaire (140),
dans lequel la zone de module (150) est formée en une pluralité par compartimentation de la paroi de séparation principale (130) et de la paroi de séparation secondaire (140),
**caractérisé en ce que** le boîtier de bloc comprend en outre :
un bloc de support (160) faisant saillie à partir d'une limite de la paroi de séparation secondaire (140) et de la plaque de base (110) ;
dans lequel le module de batterie (M) comprend en outre une partie en saillie (M1) faisant saillie pour être portée sur la partie supérieure du bloc de support (160) des deux côtés,
dans lequel le module de batterie (M) est fixé au boîtier de bloc (100) par un élément boulon pénétrant dans la partie en saillie (M1) et vissé au bloc de support (160),
dans lequel le module de batterie (M) est fixé à la paroi de séparation secondaire (140) en vissant ensemble l'extrémité supérieure et l'extrémité de l'élément de fixation (170), dans lequel l'élément de fixation (170) couvre la paroi de séparation secondaire (140) pour être accouplé par vis à des modules de batterie (M) situés des deux côtés de la paroi de séparation secondaire (140), respectivement, et
dans lequel l'élément de fixation (170) est fixé en étant accouplé par vis à l'extrémité supérieure de la paroi de séparation secondaire (140).

2. Bloc-batterie selon la revendication 1, dans lequel
la plaque de base (110) est déformée par des changements dans au moins une parmi une pression et une température dans la zone de module (150).

3. Bloc-batterie selon la revendication 1, dans lequel
chacune des zones de module (150) est scellée par la paroi de séparation principale (130) et la paroi de séparation secondaire (140).

4. Bloc-batterie selon la revendication 1, dans lequel
la plaque de base (110) est formée par l'accouplement d'une pluralité de plaques de support (111) correspondant à chaque zone de module (150), dans lequel
chacune des plaques de support (111) est déformée par des changements dans au moins une parmi une pression et une température d'une zone de module (150) correspondante.

5. Bloc-batterie selon la revendication 1, dans lequel
la plaque de base (110) comporte une pluralité de saillies (112) faisant saillie vers le haut.

6. Bloc-batterie selon la revendication 5, dans lequel
les saillies (112) sont formées de manière dispersée sur la partie supérieure de la plaque de base (110) sous la forme de points, ou sont formées s'étendant de manière unidirectionnelle côte à côte sur la partie supérieure de la plaque de base (110) sous la forme de lignes.

7. Bloc-batterie selon la revendication 6, dans lequel
les saillies (112) sous la forme de points font saillie sous la forme d'une corne ou d'une colonne.

8. Bloc-batterie selon la revendication 6, dans lequel
les saillies (112) sous la forme de lignes s'étendent sous la forme d'une ligne droite ou d'une ligne courbe.

9. Bloc-batterie selon la revendication 1, dans lequel
la plaque de base (110) a une résistance pour supporter au moins le poids du module de batterie (M).

10. Bloc-batterie selon la revendication 1, dans lequel
la plaque de base (110) se gonfle vers l'extérieur sous la pression de gaz générés dans la zone de module (150).
